# EUROPÄISCHE PATENTANMELDUNG

(11) **EP 2 191 931 A1**
(43) Veröffentlichungstag der Anmeldung: **02.06.2010**
(21) Anmeldenummer: 09014728.1
(22) Anmeldetag: 26.11.2009
(51) Int. Cl.: B23Q 1/54, B23Q 3/157

(54) **Werkzeugmaschine mit einem verstellbaren Werkzeugmagazin**

(30) Priorität: 26.11.2008 DE 102008059089; 26.11.2008 DE 202008015671 U
(71) Anmelder: Gebr. Saacke GmbH & Co.KG, 75181 Pforzheim (DE)
(72) Erfinder: Schütze, Alfred, 75181 Pforzheim (DE); Schweigert, Jörg, 75181 Pforzheim (DE)
(74) Vertreter: Leitner, Waldemar

(57) **Zusammenfassung**

Die Erfindung betrifft eine Werkzeugmaschine, die eine Werkzeugspindel (10) zur Bearbeitung eines in einem Werkstückschlitten (3) aufgenommenen Werkstücks mittels eines in der Werkzeugspindel (10) aufgenommenen Werkzeugs (W) besitzt, und die ein drehbares Werkzeugmagazin (20) mit an seinem Umfang angeordneten Werkzeughalter (21) aufweist, in welche Werkzeuge (W) mit einer definierten Lage ihres Schafts (S) aufnehmbar sind, wobei die Werkzeugspindel (10) für einen Werkzeugwechsel von einer Verstelleinrichtung (11) zum Werkzeugmagazin (20) verfahrbar ist.

Erfindungsgemäß ist vorgesehen, dass das Werkzeugmagazin (20) verschwenkbar in einem Maschinenbett (2) der Werkzeugmaschine (1) angeordnet ist, und dass die Werkzeugspindel (10) für einen Werkzeugwechsel durch eine Verstellbewegung der Verstelleinrichtung (11) zu dem sich in seiner Grundstellung befindlichen Werkzeugmagazin (20) verfahrbar und außerhalb des Werkzeugmagazins (20) durch die Verstelleinrichtung (11) auf eine Abholhöhe absenkbar ist, wobei in der Grundstellung des Werkzeugmagazins (20) dieses derart gekippt im Maschinenbett (2) angeordnet ist, dass es von seiner dem Werkstückschlitten (3) zugewandten Seite zu seiner diesem (3) gegenüberliegenden Seite ansteigt, dass das in seiner Grundstellung befindliche Werkzeugmagazin (20) derart in eine Wechselstellung verschwenkbar ist, dass der Schaft (S) des im Werkzeughalter (21) aufgenommenen, auszuwechselnden Werkzeugs (W) in dieser Wechselstellung des Werkzeugmagazins (20) vor einer auf die Abholhöhe abgesenkten Aufnahme (13) der Werkzeugspindel (10) angeordnet ist, dass durch eine erste Relativbewegung zwischen der im Werkzeugmagazin (20) aufgenommenen Werkzeugspindel (10) und dem Werkzeugmagazin (20) der Schaft (S) dieses Werkzeugs (W) in der Aufnahme (13) der Werkzeugspindel (10) spannbar ist, und dass durch eine Relativbewegung zwischen der Werkzeugspindel (10) und dem Werkzeugmagazin (20) das einzuwechselnde Werkzeug (W) aus seiner Werkzeughalterung (21) bewegbar ist.

## Beschreibung

Die Erfindung betrifft eine Werkzeugmaschine, die eine Werkzeugspindel zur Bearbeitung eines in einem Werkstückschlitten aufgenommenen Werkstücks mittels eines in der Werkzeugspindel aufgenommenen Werkzeugs besitzt, und die ein drehbares Werkzeugmagazin mit an seinem Umfang angeordneten Werkzeughalter aufweist, in welche Werkzeuge mit einer definierten Lage ihres Schafts aufnehmbar sind, wobei die Werkzeugspindel für einen Werkzeugwechsel von einer Verstelleinrichtung zum Werkzeugmagazin verfahrbar ist.

Eine derartige Werkzeugmaschine ist aus europäischen Patentanmeldung EP 1 886 762 bekannt. In dieser Druckschrift ist eine Werkzeugmaschine beschrieben, die ein horizontales Maschinenbett aufweist, auf welchem horizontal in einer X-Achse verfahrbar eine Werkzeugspindel gelagert ist. Diese ist horizontal angeordnet und über einen Werkstückspindelantrieb rotierend antreibbar. An beiden Seiten des Maschinenbetts ist jeweils eine vertikal nach oben gerichtete Seitenwange ausgebildet. Auf den horizontalen, in der Y-Achse verlaufenden Oberseiten der Seitenwange ist jeweils eine Y-Führung angeordnet, auf denen eine Brücke gelagert ist, die in der Y-Achse gesteuert angetrieben verfahrbar ist und einen Arbeitsraum der Werkzeugmaschine zwischen den Seitenwangen überspannt. Zentrisch in der Brücke ist ein Z-Schlitten angeordnet, der gesteuert antreibbar in der vertikalen Z-Achse verfahrbar und gesteuert antreibbar um seine vertikale C-Achse drehbar ist. Am unteren Ende des Z-Schlittens ist ein Träger befestigt, an welchem eine drehantreibbare Werkzeugspindel mit horizontaler Achse gelagert ist, die in der horizontalen Achse gesteuert verfahrbar ist. Die Werkzeugmaschine weist ein Magazinrad auf, welches um eine vertikale, zur Z-Achse parallele Achse gesteuert drehbar angetrieben wird. Das Magazinrad besteht aus einer in einer horizontalen Ebene liegenden kreisförmigen Magazinscheibe, an deren Außenumfang ein vertikal nach oben weisender Magazinring angeordnet ist. Die Magazinscheibe sitzt zentrisch auf einer vertikalen Antriebswelle und ist zu ihrer Drehbewegung von einem Motor antreibbar. Der Magazinring weist mehrere Werkzeughalter auf, in denen Werkzeuge mit ins Innere des Magazinrads weisenden Schäften aufgenommen sind. Um nun ein Werkzeug zu wechseln, wird das Magazinrad von seiner Grundstellung in den Arbeitsraum der Werkzeugmaschine hineingedreht, und zwar derart, dass ein freier Werkzeughalter in eine Wechselposition gebracht wird, d. h. in der Ebene der Y-Bewegung des Z-Schlittens positioniert ist. Der Z-Schlitten wird dann so gedreht, dass der Träger mit der Werkzeugspindel ebenfalls in dieser Ebene ausgerichtet ist. Nun fährt die Brücke in der Y-Achse nach hinten, bis sich die Werkzeugspindel oberhalb des Magazinrads und innerhalb des Umfangs des Magazinrings befindet. Dann wird der Z-Schlitten vertikal nach unten gefahren, wobei das Werkzeug mit seiner Greifrille in die Aufnahme des freien Werkzeughalters eingelegt wird. Anschließend fährt der Z-Schlitten in der Y-Achse weiter nach hinten, wodurch die Werkzeugspindel radial von dem Magazinring nach innen bewegt wird. Nach dieser Ablage des Werkzeugs im Magazinrad wird nun das Magazinrad über den Motor gesteuert verdreht, bis das nächste ausgewählte Werkzeug in der Wechselposition radial vor der Werkzeugaufnahme der Werkzeugspindel positioniert ist. In dieser Stellung wird die Werkzeugspindel mittels des Z-Schlittens wieder radial nach außen geschoben, wodurch sich ihre Werkzeugaufnahme auf den Schaft des nun positionierten nächsten Werkzeugs schiebt und dieses spannt. Mittels des Z-Schlittens wird nun die Werkzeugspindel mit dem gespannten nächsten Werkzeug nach oben gefahren, wodurch das Werkzeug aus dem Werkzeughalter herausgehoben wird. Sobald sich die Werkzeugspindel mit dem Werkzeug oberhalb des Magazinrings befindet, kann die Werkzeugspindel wieder in ihre Arbeitsstellung gefahren werden und das Magazinrad wird in seine Grundstellung zurückgedreht, so dass die den Arbeitsraum der Werkzeugmaschine vom Magazinrad trennenden Wände geschlossen und die Bearbeitung des Werkstücks mit einem neuen Werkzeug beginnen kann.

Die bekannte Werkzeugmaschine besitzt den Nachteil, dass ein Werkzeugwechsel nur aufwendig und daher zeitraubend durchzuführen ist, was zu hohen Werkzeugwechselzeiten führt: Zum einen muss bei der bekannten Werkzeugmaschine das Magazinrad außerhalb des Arbeitsraums der Werkzeugmaschine angeordnet und nach dem Öffnen der Trennwände erst in seine Wechselposition gefahren werden. Des weiteren bewirkt die Anordnung des Werkzeugmagazins in der Werkzeugmaschine, dass umfangreiche und komplexe Verfahrbewegungen der Werkzeugspindel erforderlich sind, da für einen Werkzeugwechsel zuerst die Werkzeugspindel horizontal über dem Magazin positioniert werden muss, dann vertikal ins Innere des Magazins abgesenkt und in dem Magazinrad radial in bezug zu den Werkzeughaltern verfahren werden muss. Diese Abfolge - Positionieren der Werkzeugspindel über dem Magazinrad, Absenken derselben in das Magazinrad und Verfahren im Inneren des Magazinrads - führt in nachteiliger Art und Weise zu hohen Rüstzeiten der bekannten Werkzeugmaschine.

Die DE 199 19 446 A1 beschreibt eine Werkzeugmaschine mit einem Werkstücktisch zum Aufspanen von zu bearbeitenden Werkstücken, auf dem eine in einem Arbeitsbereich relativ zu den Werkstückstücken verfahrbare Spindel vorgesehen ist, in die Werkzeuge für die Bearbeitung der Werkstücke einwechselbar sind. Diese sind in einem Maschinenmagazin gehalten, das zum Werkzeugwechsel in den Arbeitsbereich hineinbewegbar ist, so dass ein in dem Maschinenmagazin enthaltenes Werkzeug durch die Spindel entnehmbar ist. Hierzu ist vorgesehen, dass - nachdem das Maschinenmagazin in den Arbeitsbereich der Spindel hineinbewegt wurde, diese über das Maschinenmagazin bewegt und abgesenkt wird und derart das im Maschinenmagazin gehaltene, auszuwechselnde Werkzeug anfährt. Die Spindel wird dann wieder angehoben und, während die Spindel dann wieder in ihre Arbeitsposition fährt, das Maschinenmagazin aus dem Arbeitsbereich herausbewegt.

Es ist daher Aufgabe der vorliegenden Erfindung, eine Werkzeugmaschine der eingangs genannten Art derart weiterzubilden, dass bei einem vereinfachten Aufbau kürzere Werkzeugwechselzeiten erreicht werden.

Diese Aufgabe wird erfindungsgemäß dadurch gelöst, dass das Werkzeugmagazin verschwenkbar in einem Maschinenbett der Werkzeugmaschine angeordnet ist, und dass die Werkzeugspindel für einen Werkzeugwechsel durch eine Verstellbewegung der Verstelleinrichtung zu dem sich in seiner Grundstellung befindlichen Werkzeugmagazin verfahrbar und außerhalb des Werkzeugmagazins durch die Verstelleinrichtung auf eine Abholhöhe absenkbar ist, wobei in der Grundstellung des Werkzeugmagazins dieses derart gekippt im Maschinenbett angeordnet ist, dass es von seiner dem Werkstückschlitten zugewandten Seite zu seiner diesem gegenüberliegenden Seite ansteigt, dass das in seiner Grundstellung befindliche Werkzeugmagazin derart in einer Wechselstellung verschwenkbar ist, dass der Schaft des im Werkzeughalter aufgenommenen, auszuwechselnden Werkzeugs in dieser Wechselstellung des Werkzeugmagazins vor einer auf die Abholhöhe abgesenkten Aufnahme der Werkzeugspindel angeordnet ist, dass durch eine erste Relativbewegung zwischen der im Werkzeugmagazin aufgenommenen Werkzeugspindel und dem Werkzeugmagazin der Schaft dieses Werkzeugs in der Aufnahme der Werkzeugspindel spannbar ist, und dass durch eine Relativbewegung zwischen der Werkzeugspindel und dem Werkzeugmagazin das einzuwechselnde Werkzeug aus seiner Werkzeughalterung bewegbar ist.

Durch die erfindungsgemäßen Maßnahmen wird in vorteilhafter Art und Weise eine Werkzeugmaschine geschaffen, die sich durch eine kompakte Bauweise und durch einen einfach durchzuführenden Werkzeugwechsel auszeichnet. Die Verschwenkbarkeit des in der Werkzeugmaschine angeordneten Werkzeugmagazins erlaubt es in vorteilhafter Art und Weise, dass für einen Werkzeugwechsel die Werkzeugspindel leicht und ohne komplexe Verfahrbewegungen ins Innere des Werkzeugmagazins eingebracht oder an die Außenseite des Werkzeugmagazins herangefahren werden kann, und dass durch eine weitere, ebenfalls einfach durchzuführende Verfahrbewegung der Werkzeugspindel und einem Verschwenken des Werkzeugmagazins von seiner Grundstellung in seine Wechselstellung das auszuwechselnde Werkzeug von der Werkzeugspindel geholt werden kann.

Eine vorteilhafte Weiterbildung der Erfindung sieht vor, dass mindestens ein Werkzeug mit einem ins Innere des Werkzeugmagazins gerichteten Schaft im Werkzeugmagazin aufnehmbar sind. Eine derartige Ausgestaltung der erfindungsgemäßen Maßnahme besitzt den Vorteil, dass hierdurch eine besonders kompakte Bauweise der erfindungsgemäßen Werkzeugmaschine möglich ist.

Eine weitere vorteilhafte Weiterbildung der Erfindung sieht vor, dass mindestens ein Werkzeug mit einem nach außen gerichteten Schaft im Werkzeugmagazin aufnehmbar ist. Eine derartige Ausbildung besitzt den Vorteil, dass hierdurch besonders kurze Verfahrwege der Werkzeugspindel und somit kurze Werkzeugwechselzeiten erreichbar sind.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, welche folgend anhand der Abbildungen beschrieben wird. Es zeigen:
- Abbildung 1:: eine schematische Darstellung eines ersten Ausführungsbeispiels einer Werkzeugmaschine,
- Abbildungen 2-9:: verschiedene Stadien eines Werkzeugwechselvorgangs, und
- Abbildung 10:: eine schematische Darstellung eines zweiten Ausführungsbeispiels einer Werkzeugmaschine.

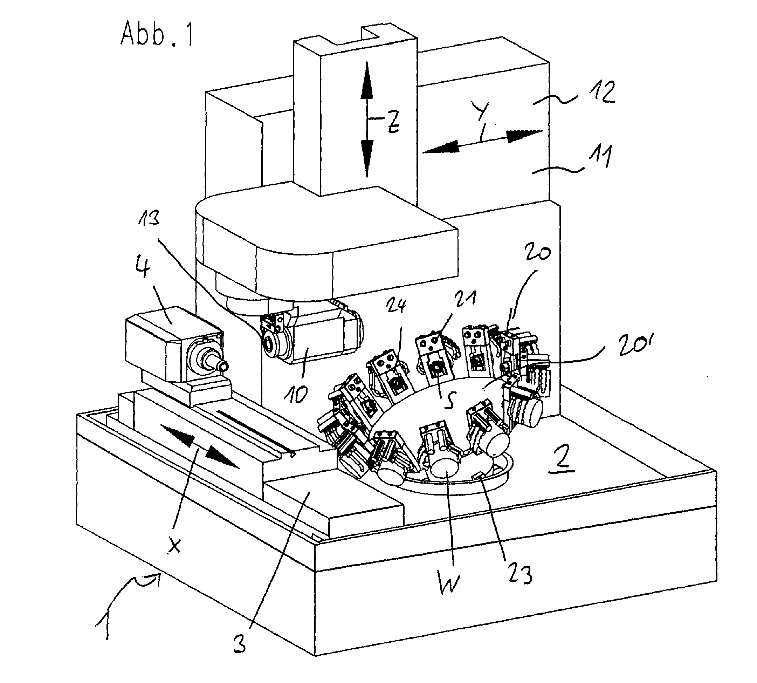

In der Abbildung 1 ist nun eine allgemein mit 1 bezeichnete Werkzeugmaschine dargestellt, deren Grundaufbau bekannt und daher nicht mehr bis ins Detail beschrieben wird. Die Werkzeugmaschine 1 weist ein Maschinenbett 2 auf, auf dem ein in einer X-Richtung verfahrbarer Werkstückschlitten 3 angeordnet ist, welcher eine Werkstückspindel 4 trägt, in der das zu bearbeitende Werkstück (nicht gezeigt) spannbar ist. Das Werkstück wird von einem Werkzeug W bearbeitet, das in einer Werkzeugspindel 10 gespannt ist. Die Werkzeugspindel 10 ist von einer Verstelleinrichtung 11, die hier als Kreuzschlitten 12 ausgebildet ist, zumindest in einer Y-Richtung und einer Z-Richtung verfahrbar.

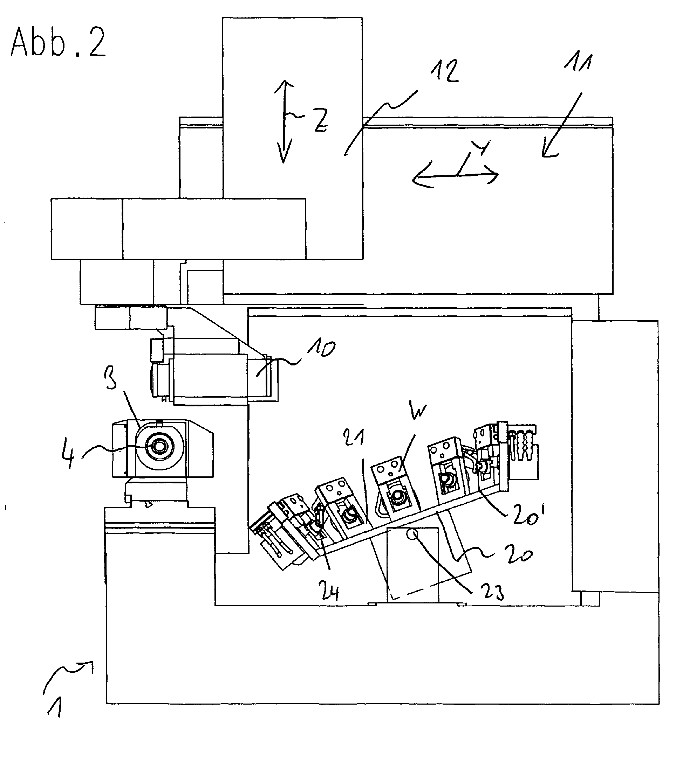

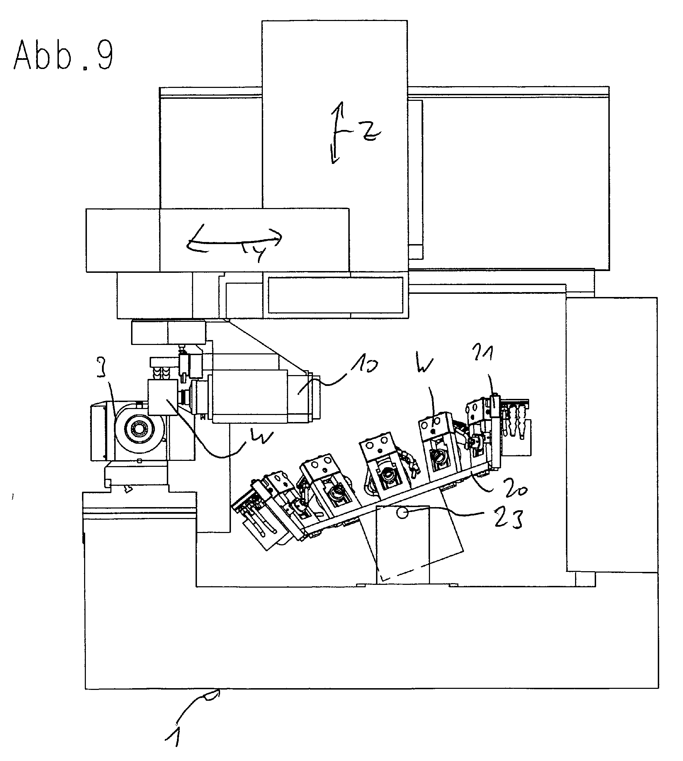

Neben dem Werkstückschlitten 3 ist im Maschinenbett 2 ein Werkzeugmagazin 20 angeordnet, das mehrere entlang seines Umfangs angeordnete Werkzeughalter 21 aufweist, in welche Werkzeuge WZ mit einem ins Innere des Werkzeugmagazins 20 gerichtetem Schaft S aufnehmbar sind. Wie aus den Figuren 2 bis 9 ersichtlich ist, ist das maschinenbettstationäre Werkzeugmagazin 20 um eine Achse 23 verschwenkbar im Maschinenbett 2 angeordnet. Die Achse 23 verläuft im hier gezeigten Fall horizontal; es ist daher auch eine schräg zur Horizontalen verlaufende Anordnung möglich.

Die Werkzeughalter 21 sind geneigt zur Grundfläche 20' des Werkzeugmagazins 20 angeordnet, wobei die Neigung der Werkzeughalter 21 derart gewählt ist, dass - wie aus der nachfolgenden Beschreibung des Werkzeugwechsels ersichtlich wird - der Schaft S des im entsprechenden Werkzeughalter 21 aufgenommenen, einzuwechselnden Werkzeugs W in der Wechselstellung des Werkzeugmagazins 20 in eine Aufnahme 13 der Werkzeugspindel 10 eingeführt werden kann.

Der Werkzeugwechsel wird nun anhand der Abbildungen 2 bis 9 beschrieben. Das Werkzeugmagazin 20 befindet sich in Figur 2 in seiner Grundposition, in der es derart gekippt im Maschinenbett 2 angeordnet ist, so dass es von seiner dem Werkstückschlitten 3 zugewandten Seite zu seiner dieser gegenüberliegenden Seite ansteigt. Diese Grundstellung des Werkzeugmagazins 20 zeichnet sich dadurch aus, dass die Werkzeugspindel 10 - wie nachstehend beschrieben - durch die Verstelleinrichtung 11 leicht in das Werkzeugmagazin 20 eingebracht werden kann.

Die wie vorstehend beschriebene gekippte Anordnung des Werkzeugmagazins 20 besitzt des weiteren den Vorteil, dass hierdurch das Werkzeugmagazin 20 nahe am Werkstückschlitten 3 und somit der Werkzeugspindel 10 positioniert werden kann, da das Werkzeugmagazin 20 in seiner in Figur 2 gezeigten Grundstellung in seinem dem Werkstückschlitten 3 zugewandten Bereich unterhalb der Bearbeitungsebene des Werkstücks liegt, so dass es die zur Bearbeitung des im Werkstückschlitten 3 aufgenommenen Werkstücks erforderliche Bewegungen der Werkzeugspindel 10 nicht behindert. Eine derartig ausgebildete Werkzeugmaschine 1 baut daher besonders kompakt. Ein weiterer Vorteil der beschriebenen Anordnung ist, dass die Werkzeugspindel 10 - wie nachstehend beschrieben - beim Werkzeugwechsel nur kurze Verfahrwege durchlaufen muss, um diesen durchzuführen.

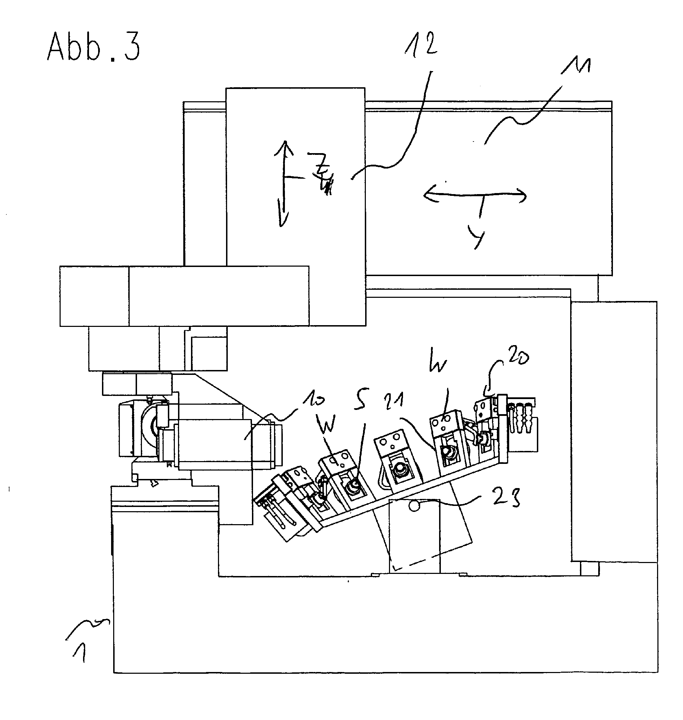

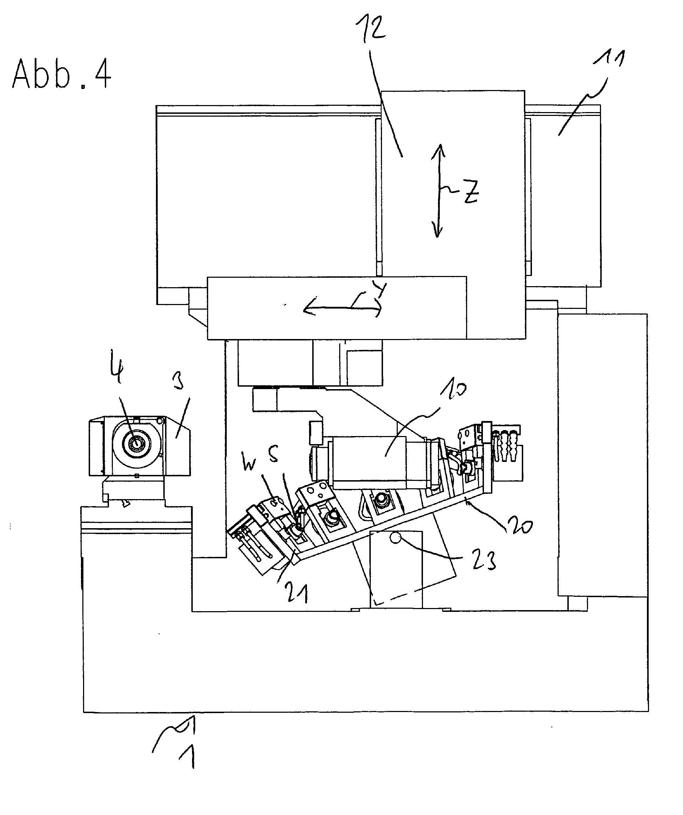

Um nun ein Werkzeug W aus dem Werkzeugmagazin 20 aufzunehmen, wird das Werkzeugmagazin 20 derart gedreht, bis das einzuwechselnde Werkzeug in einer Abholposition liegt, in der es von der Werkzeugspindel 10 abgeholt werden kann: Hierzu wird die Werkzeugspindel 10 aus ihrer in den Abbildungen 1 und 2 dargestellten Arbeitsposition, in der sie eine Bearbeitung des Werkstücks durchführt, abgesenkt, bis sie sich in einer Abholhöhe für das Werkzeug W befindet, wie dies in Figur 3 dargestellt ist. Danach wird die Werkzeugspindel 10 von der Verstelleinrichtung 11 in der Richtung Y bewegt und in das Innere des Werkzeugmagazins 20 verfahren, bis sie sich in der in Figur 4 gezeigten Position befindet.

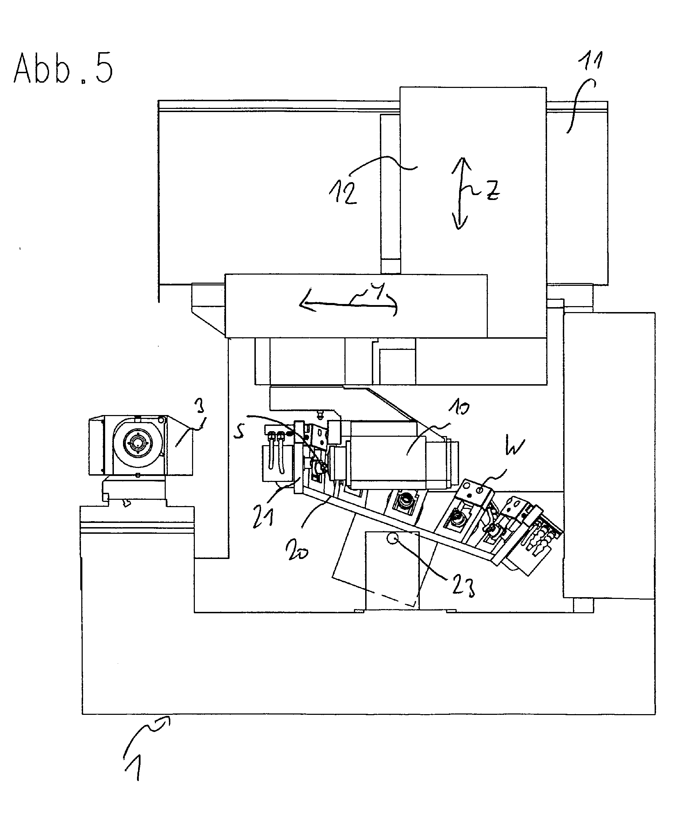

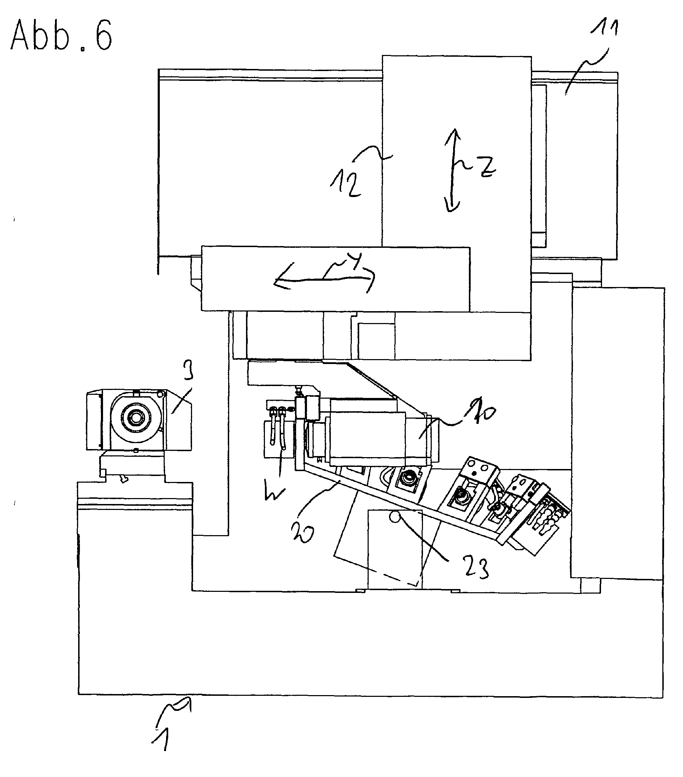

Wie aus der Figur 5 ersichtlich, wird dann das Werkzeugmagazin 20 um die Achse 23 verschwenkt, bis der Schaft S des abzuholenden Werkzeugs W in der Abholhöhe, also in der Höhe der Aufnahme 13 der Werkzeugspindel 20, liegt. Durch die vorstehend beschriebene geneigte Anordnung der Werkzeughalter 21 wird erreicht, dass der Schaft S des Werkzeugs W und die Aufnahme 13 der Werkzeugspindel 10 fluchten. Wird nun - wie aus Figur 6 ersichtlich - die Werkzeugspindel 20 von der Verstelleinrichtung 11 in der Richtung Y bewegt, taucht der Schaft S des Werkzeugs W in der Aufnahme 13 der Werkzeugspindel 10 ein und wird von dieser gespannt.

Anstelle die Werkzeugspindel 10 durch die Verstelleinrichtung 11 in der Richtung Y zum Auswechseln des Werkzeugs W zum Werkzeugmagazin 20 hinzubewegen, kann - was aber nicht bevorzugt wird - auch das ansonsten maschinenbettstationäre Werkzeugmagazin 20 entsprechend in Richtung der Werkzeugspindel 10 verschoben werden, so dass durch diese erste Relativbewegung zwischen Werkzeugspindel 10 und Werkzeugmagazin 20 der Schaft S des einzuwechselnden Werkzeugs W in die Aufnahme 13 der Werkzeugspindel 10 eingebracht wird.

Auch eine Kombination der beiden vorstehend beschriebenen Bewegungsarten ist möglich, um die zum Einsetzen des Werkzeugs W in die Aufnahme 13 der Werkzeugspindel 10 erforderlichen Relativbewegung zwischen dieser und dem Werkzeugmagazin 20 durchzuführen.

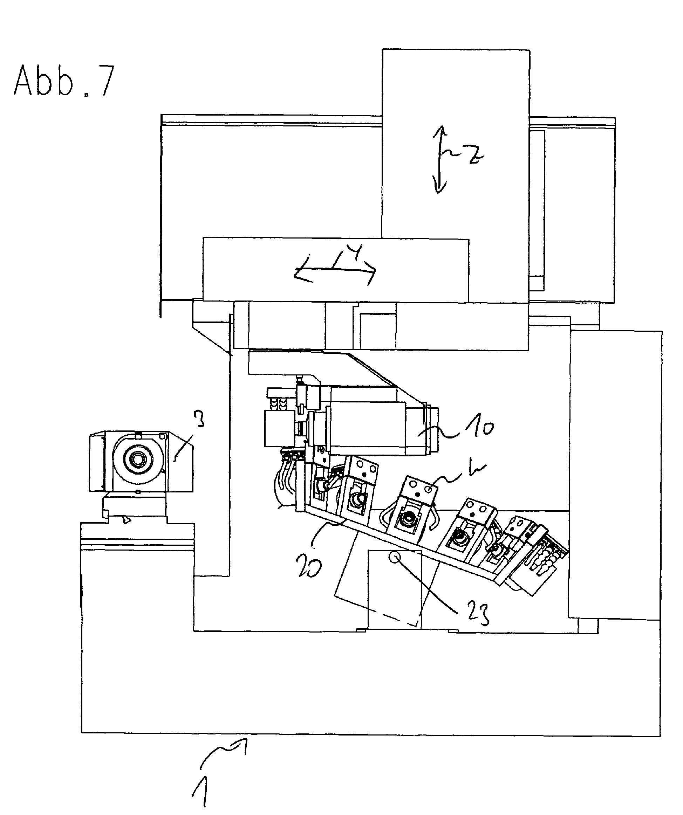

Nachdem das einzuwechselnde Werkzeug W wie vorstehend beschrieben in der Werkzeugspindel 20 aufgenommen wurde, wird dann - wie aus Figur 7 ersichtlich - die Werkzeugspindel 20 von der Verstelleinrichtung 11 in der Z-Richtung nach oben bewegt, so dass das Werkzeug W aus einer nach oben offenen Aufnahme 24 des Werkzeughalters 21 des Werkzeugmagazins 20 entnommen wird. Anstelle die Werkzeugspindel 10 durch die Verstelleinrichtung 11 in der Richtung Z anzuheben, ist es natürlich auch möglich, dass das Werkzeugmagazin 20 entsprechend abgesenkt wird. Es ist denkbar, dass die zum Herausbewegen des Werkzeugs W aus dem Werkzeughalter 21 erforderliche zweite Relativbewegung zwischen dem Werkzeugmagazin 10 und der Werkzeugspindel 20 durch eine Kippbewegung des Werkzeugmagazins 10 aus seiner Wechselposition in Richtung seiner Grundstellung erfolgt. Auch eine Kombination vorgenannter Maßnahmen ist möglich.

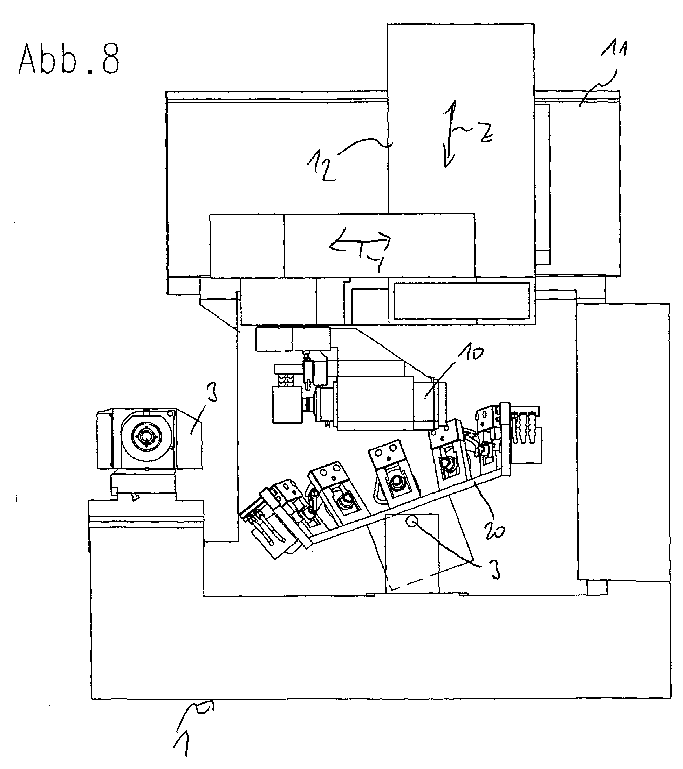

Das Werkzeugmagazin 20 kann dann - wie aus Figur 8 ersichtlich - wiederum um die Achse 23 in seine Grundstellung verschwenkt werden und die Werkzeugspindel 20 fährt dann in der Richtung Y zum Werkstückschlitten 3, wird dort auf ihre Arbeitshöhe angehoben, so dass sie das Werkstück bearbeiten kann.

Um nun ein Werkzeug W aus der Werkzeugspindel 10 in das Werkzeugmagazin 20 abzulegen, wird ein leerer Werkzeughalter 21 des Werkzeugmagazins 20 in der Abholposition positioniert und der Werkzeug-Ablegevorgang erfolgt dann in einer der vorstehend beschrieben Werkzeugaufnahme entsprechenden Weise.

Wie dem Fachmann aus der obigen Beschreibung ersichtlich ist, bestehen bezüglich des auswechselnden Werkzeugs W im wesentlichen keine Einschränkungen, solange das Werkzeug W durch eine erste Relativbewegung zwischen der Werkzeugspindel 10 und dem Werkzeugmagazin 20 in die Aufnahme 13 der Werkzeugspindel 10 eingbringbar und durch eine zweite Relativbewegung aus dem Werkzeughalter 21 des Werkzeugmagazins 20 entnehmbar ist. Demzufolge ist es auch möglich, komplexere Werkzeuge, wie z. B. Schleifwerkzeuge, insbesondere auch ein Schleifwerkzeug mit einer mit diesem zusammenwirkenden Kühlmittelzufuhr, mittels der beschriebenen Vorgangsweise zu wechseln.

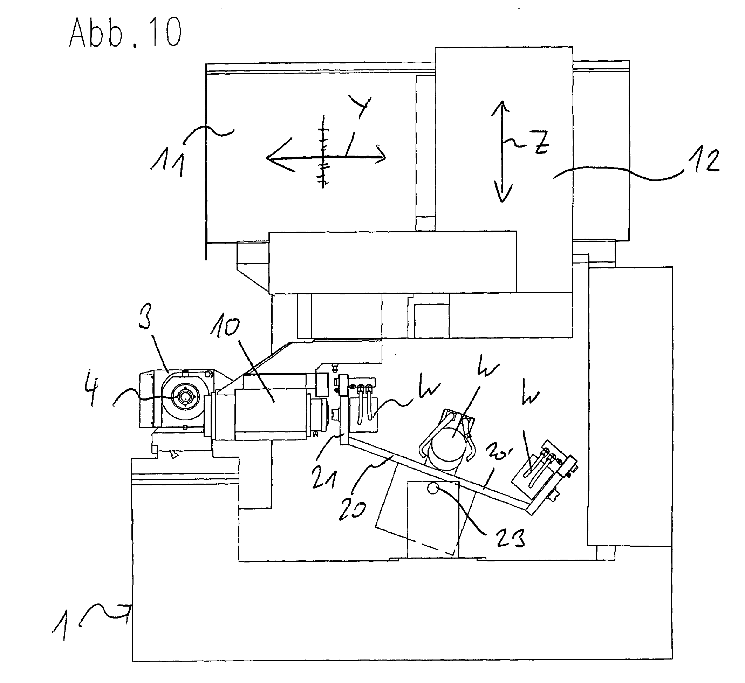

In der Abbildung 10 ist eine zweite Ausführungsform der Werkzeugmaschine 1 dargestellt, deren prinzipieller Aufbau mit demjenigen des ersten Ausführungsbeispiels übereinstimmt, so dass einander entsprechende Bauteile mit gleichen Bezugszeichen versehen sind und nicht mehr näher beschrieben werden. Der wesentliche Unterschied zwischen dem ersten und zweiten Ausführungsbeispiel ist, dass beim zweiten Ausführungsbeispiel vorgesehen ist, dass die Werkzeuge W nicht - wie beim ersten Ausführungsbeispiel - mit einem in das Innere des Werkzeugmagazins 20 gerichteten Schaft S in diesem aufgenommen sind, sondern dass die Werkzeuge W mit einem nach außen gerichteten Schaft S im Werkzeugmagazin 20 aufnehmbar sind. Um nun ein Werkzeug W aus dem Werkzeugmagazin 20 aufzunehmen, wird das Werkzeugmagazin 20 von der in Abbildung 4 gezeigten Position in die in Abbildung 10 gezeigte Position gekippt und derart gedreht, bis das einzuwechselnde Werkzeug in einer Abholposition liegt, in der es wie beschrieben von der Werkzeugspindel 10 abgeholt werden kann. Die zuvor auf ihre Abholhöhe gebrachte Werkzeugspindel 10 wird in Y-Richtung bewegt und nimmt derart den Schaft S des abzuholenden Werkzeugs W auf. Dann wird die Werkzeugspindel 20 von der Verstelleinrichtung 11 in der Z-Richtung nach oben bewegt, so dass das Werkzeug W aus der Aufnahme 24 des Werkzeughalters 21 des Werkzeugmagazins 20 entnommen wird. Dann wird die Werkzeugspindel 20 wieder zurückgefahren und auf ihre Arbeitshöhe angehoben, so dass sie das Werkstück W bearbeiten kann.

Bei den beiden vorstehend beschriebenen Ausführungsbeispielen wird davon ausgegangen, dass die Werkzeuge W entweder alle mit dem Schaft S nach innen oder mit dem Schaft S nach außen in dem Werkzeugmagazin 20 aufgenommen sind. Dies ist aber nicht zwingend erforderlich. Es ist - obwohl eine derartige Anordnung nicht bevorzugt wird - ebenso möglich, dass eines oder einige der Werkzeuge W mit in das Innere des Werkzeugmagazins 20 weisenden Schaft S und mindestens ein anderes Werkzeug W mit einem nach außen ragenden Schaft S im Werkzeugmagazin 20 aufgenommen ist.

Bei der vorstehenden Beschreibung der beiden Ausführungsbeispiele wurde des weiteren davon ausgegangen, dass das ganze Werkzeugmagazin 20 gekippt wird. Es ist natürlich auch möglich, dass - anstelle das gesamte Werkzeugmagazin 20 zu kippen - nur der jeweilig benötigte Werkzeughalter 21 gekippt wird.

Durch die beschriebenen Maßnahmen, insbesondere durch die Verkippbarkeit des Werkzeugmagazins 20, ist in besonders einfacher Art und Weise ein Werkzeugwechsel durchführbar, der einen kompakten Aufbau der Werkzeugmaschine 1 ermöglicht und sich durch relativ wenig Bewegungsschritte der Werkzeugspindel 10 beim Werkzeugwechsel auszeichnet, so dass in vorteilhafter Art und Weise eine kurze Werkzeugwechselzeit und somit eine kurze Rüstzeit der Werkzeugmaschine 1 gegeben ist.

## Patentansprüche

1. Werkzeugmaschine, die eine Werkzeugspindel (10) zur Bearbeitung eines in einem Werkstückschlitten (3) aufgenommenen Werkstücks mittels eines in der Werkzeugspindel (10) aufgenommenen Werkzeugs (W) besitzt, und die ein drehbares Werkzeugmagazin (20) mit an seinem Umfang angeordneten Werkzeughalter (21) aufweist, in welche Werkzeuge (W) mit einer definierten Lage ihres Schafts (S) aufnehmbar sind, wobei die Werkzeugspindel (10) für einen Werkzeugwechsel von einer Verstelleinrichtung (11) zum Werkzeugmagazin (20) verfahrbar ist, **dadurch gekennzeichnet, dass** das Werkzeugmagazin (20) verschwenkbar in einem Maschinenbett (2) der Werkzeugmaschine (1) angeordnet ist, und dass die Werkzeugspindel (10) für einen Werkzeugwechsel durch eine Verstellbewegung der Verstelleinrichtung (11) zu dem sich in seiner Grundstellung befindlichen Werkzeugmagazin (20) verfahrbar und außerhalb des Werkzeugmagazins (20) durch die Verstelleinrichtung (11) auf eine Abholhöhe absenkbar ist, wobei in der Grundstellung des Werkzeugmagazins (20) dieses derart gekippt im Maschinenbett (2) angeordnet ist, dass es von seiner dem Werkstückschlitten (3) zugewandten Seite zu seiner diesem (3) gegenüberliegenden Seite ansteigt, dass das in seiner Grundstellung befindliche Werkzeugmagazin (20) derart in eine Wechselstellung verschwenkbar ist, dass der Schaft (S) des im Werkzeughalter (21) aufgenommenen, auszuwechselnden Werkzeugs (W) in dieser Wechselstellung des Werkzeugmagazins (20) vor einer auf die Abholhöhe abgesenkten Aufnahme (13) der Werkzeugspindel (10) angeordnet ist, dass durch eine erste Relativbewegung zwischen der im Werkzeugmagazin (20) aufgenommenen Werkzeugspindel (10) und dem Werkzeugmagazin (20) der Schaft (S) dieses Werkzeugs (W) in der Aufnahme (13) der Werkzeugspindel (10) spannbar ist, und dass durch eine Relativbewegung zwischen der Werkzeugspindel (10) und dem Werkzeugmagazin (20) das einzuwechselnde Werkzeug (W) aus seiner Werkzeughalterung (21) bewegbar ist.

2. Werkzeugmaschine nach Anspruch 1, **dadurch gekennzeichnet, dass** mindestens ein Werkzeug (W) mit einem in das Innere des Werkzeugmagazins (20) gerichteten Schaft (S) aufnehmbar ist.

3. Werkzeugmaschine nach Anspruch 1, **dadurch gekennzeichnet, dass** mindestens ein Werkzeug (W) mit einem nach außen weisenden Schaft (S) im Werkzeugmagazin (20) aufnehmbar ist.

4. Werkzeugmaschine nach einem der vorangehenden Ansprüche, **dadurch gekennzeichnet, dass** zur Erzeugung der ersten Relativbewegung zwischen dem Werkzeugmagazin (20) und der Werkzeugspindel (10) letztere durch die Verstelleinrichtung (11) in einer der Richtung der Verstellbewegung entgegengesetzten Richtung (Y) bewegbar ist.

5. Werkzeugmaschine nach einem der vorangehenden Ansprüche, **dadurch gekennzeichnet, dass** die erste Relativbewegung zwischen dem Werkzeugmagazin (20) und der Werkzeugspindel (10) durch eine Verkippbewegung des Werkzeugmagazins (20) erfolgt.

6. Werkzeugmaschine nach einem der vorangehenden Ansprüche, **dadurch gekennzeichnet, dass** die zweite Relativbewegung zwischen dem Werkzeugmagazin (20) und Werkzeugspindel (10) durch eine Bewegung der Werkzeugspindel (10) durch die Verstelleinrichtung (11) einer zweiten Richtung (Z) erfolgt.

7. Werkzeugmaschine nach einem der vorangehenden Ansprüche, **dadurch gekennzeichnet, dass** die Werkzeugspindel (10) nach der Aufnahme des Werkzeugs (W) aus dem sich in seiner Wechselstellung befindlichen Werkzeugmagazin (20) durch die Verstelleinrichtung (11) aus diesem herausbewegbar ist.

8. Werkzeugmaschine nach einem der vorangehenden Ansprüche, **dadurch gekennzeichnet, dass** mindestens einer der am Umfang des Werkzeugmagazins (20) angeordneten Werkzeughalter (21) geneigt zu einer Grundfläche (20') des Werkzeugmagazins (20) angeordnet sind.

9. Werkzeugmaschine nach einem der vorangehenden Ansprüche, **dadurch gekennzeichnet, dass** mindestens ein Werkzeughalter (21) eine sich nach oben öffnende Aufnahme (24) aufweist, in welcher das Werkzeug (W) durch eine Bewegung in der zweiten Richtung (Z) aus dem Werkzeughalter (21) herausbewegbar ist.
